(19) Europäisches Patentamt
European Patent Office
Office européen des brevets

(11) **EP 4 654 523 A1**

(12) **EUROPEAN PATENT APPLICATION**

(43) Date of publication:
**26.11.2025 Bulletin 2025/48**

(21) Application number: **24188768.6**

(22) Date of filing: **16.07.2024**

(51) International Patent Classification (IPC):
***H04L 9/30*** (2006.01)  ***H04L 9/32*** (2006.01)

(52) Cooperative Patent Classification (CPC):
**H04L 9/3252; H04L 9/3093; H04L 9/3239;**
H04L 2209/34

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.05.2024 EP 24177542**

(71) Applicant: **Nagravision Sarl
1033 Cheseaux-sur-Lausanne (CH)**

(72) Inventors:
- **MACCHETTI, Marco
  1033 Cheseaux-sur-Lausanne (CH)**
- **VILLEGAS, Karine
  1033 Cheseaux-sur-Lausanne (CH)**

(74) Representative: **Santarelli
Tour Trinity
1 bis Place de la Défense
92400 Courbevoie (FR)**

(54) **METHOD FOR GENERATING A DIGITAL SIGNATURE, METHOD FOR VERIFYING THE DIGITAL SIGNATURE, CORRESPONDING COMPUTER PROGRAM PRODUCTS AND DEVICES**

(57)    A method is proposed for generating a digital signature associated to a digital message, the verification of the digital signature involving an evaluation of at least one mathematical function defined as a sequence of processing steps, a result of a given processing step in the sequence being used as an input for a processing step following the given processing step in the sequence.

Such method comprises:
- generating the digital signature of the digital message;
- determining at least one value, hereafter checkpoint value, corresponding to an expected output of a respective processing step; and
- sending at least part of the digital signature and the at least one checkpoint value.

S210 — GEN. DIG. SIG.

S220 — DET. CHE. VAL.

S230 — DET. ADD. DAT.

S240 — SEN. SIG. CHE.

**Figure 2**

**Description**

## 1. FIELD OF THE DISCLOSURE

The field of the disclosure is that of the digital signature of digital messages.

More specifically, the disclosure relates to technics for generating and for verifying such digital signature.

The disclosure can be of interest in any technical field wherein digital signatures are used, and have to be verified. It can be e.g., in the field of secure communications, of the delivery of conditional access data (e.g. pay-TV), of public-key infrastructures (PKI), in the field of connected objects, of autonomous vehicles, of digital moneys, of blockchains etc.

## 2. TECHNOLOGICAL BACKGROUND

Elliptic curve digital signature algorithm (ECDSA) is today probably the most popular signature scheme, used ubiquitously in secure communication schemes, crypto currency platforms and device security solutions. However, other digital signature schemes exist and are already used like e.g., Schnorr signatures or Edwards-curve digital signature algorithm (EdDSA). Other digital signature schemes are also forecasted for future use. This later case applies to post-quantum digital signatures like e.g., hash-based schemes or lattice-based schemes (e.g. Module-Lattice-Based Digital Signature algorithms (ML-DSA) based on CRYSTALS-Dilithium algorithm).

A common feature of all those schemes is that they require a high amount of computational load, in particular for verifying the validity of the digital signature. However, in some cases, the speed of signature verification is very important.

It can be the case e.g. for vehicle-to-vehicle communication frameworks wherein the security processor inside a car must evaluate the authenticity of messages coming from other cars or road infrastructure (e.g. for bringing information about the position and speed of other vehicles). Such authenticity is typically verified by means of a digital signature. It is estimated that in worst case, the security system of the car must verify several thousand signatures per second whereas the reactivity of the system is of high importance.

Another example is that of platforms in which signatures are verified many times. This is case of a blockchain where the setup of a new node requires sequentially verifying all the signatures in the chain (millions up to billions) to reach a trusted state. In the same way, the consensus between a set of stakeholder nodes must be reached as soon as possible. This usually implies verification of a bunch of signatures in the minimum possible time.

Another example is that of an IoT scenario where an edge device collects many signatures from devices and has to implement fast local action and/or escalation based on some critical message that were correctly verified.

There is thus a need for reducing latency during a verification of a digital signature.

## 3. SUMMARY

A particular aspect of the present disclosure relates to a method for generating a digital signature associated to a digital message. The verification of the digital signature involves an evaluation of at least one mathematical function defined as a sequence of processing steps. A result of a given processing step in the sequence is used as an input for a processing step following the given processing step in the sequence. According to such method, a first electronic device executes:

- generating the digital signature of the digital message;
- determining at least one value, hereafter checkpoint value, corresponding to an expected output of a respective processing step; and
- sending, to a second electronic device, at least part of the digital signature and the at least one checkpoint value.

Thus, the present disclosure proposes a new and inventive solution for reducing the latency during a verification of a digital signature.

More particularly, the checkpoint values sent with the digital signature allows the second electronic device in charge of the verification of the digital signature to implement as independent processes executed in parallel the processing steps using as an input a respective checkpoint value. Such execution in parallel rather than sequentially, as required according to the known technics wherein the checkpoint values are not provided, allows reducing the latency in the verification of the digital signature.

In some embodiments, the step of generating the digital signature implements an elliptic curve digital signature algorithm. The mathematical function corresponds to a scalar-point multiplication constructed upon the elliptic curve group operation of point addition. At least one processing step implements an addition of two points of the curve.

In some embodiments, the digital signature comprises a first half and a second half. The second half is a function of a private key. The first electronic device executes:

- determining a first additional data function of an invert of the second half.

The step of sending to the second electronic device comprises the sending of the first half and of the first additional data.

In the ECDSA scheme, the invert of the second half is used for verifying the digital signature. Thus, directly providing such invert of the second half to the second electronic device in charge of the verification of the digital signature allows the second electronic device to avoid calculating this invert. This thus further reduces the latency in the verification of the digital signature.

In some embodiments, the digital signature comprises a first half and a second half. The second half is a function of a private key. The first electronic device executes: determining at least one second additional data function of a result of an operation belonging to the group comprising:

- a product between the first half and an invert of the second half; and
- a product between a hash of the message and the invert of the second half.

The sending to the second electronic device comprises the sending of the at least one second additional data.

In the ECDSA scheme, those products are used for verifying the digital signature. Thus, directly providing such products to the second electronic device in charge of the verification of the digital signature allows the second electronic device to avoid calculating those products. This thus further reducing the latency in the verification of the digital signature.

In some embodiments, the first electronic device executes: determining at least one third additional data function of a result of an operation belonging to the group comprising:

- a sum between the generator of the elliptic curve and a public key; and
- a difference between the generator of the elliptic curve and the public key.

The sending to the second electronic device comprises the sending of the at least one third additional data.

Such sum and difference are input data for Akishita's ladder, which is an efficient implementation allowing the verification of an ECDSA type digital signature. Thus, directly providing such sum and difference to the second electronic device in charge of the verification of the digital signature allows further reducing the latency in the verification of the digital signature when using an implementation based on an Akishita's ladder.

In some embodiments, the step of generating the digital signature implements a hash-based signature algorithm. The mathematical function corresponds to a composition of hash functions, at least one processing step implementing one of the hash functions.

In some embodiments, the step of generating the digital signature implements a module-lattice-based digital signature algorithm. The mathematical function corresponds to a number theory transformation, at least one processing step implements one stage of a lattice of the transformation.

Another aspect of the present disclosure relates to a method for verifying a digital signature associated to a digital message. The verification of the digital signature involves an evaluation of at least one mathematical function defined as a sequence of processing steps. A result of a given processing step in the sequence is used as an input for a processing step following the given processing step in the sequence. According to such method, a second electronic device executes:

- receiving, from a first electronic device, at least part of the digital signature and at least one value, hereafter checkpoint value, corresponding to an expected output of a respective processing step;
- evaluating the at least one mathematical function using the received at least one checkpoint value as an input for a processing step following the respective processing step in the sequence, a first processing step in the sequence and at least one processing step using as an input a respective checkpoint value being independently executed as parallel processes; and
- verifying the digital signature based on the evaluated at least one mathematical function.

Thus, the latency in the verification is reduced by executing in parallel rather than sequentially the processing steps that use as an input a respective checkpoint value.

In some embodiments, the second electronic device executes, for at least one received checkpoint value corresponding to an expected output of a respective processing step:

- comparing the expected output with an output of an execution of the respective processing step; and
- if the output and the expected output are different outputs, generating an information indicative that the received at least one checkpoint value is inconsistent with the signature.

Thus, the coherence of the checkpoint values is checked during the verification process. For instance, if an inconsistency is detected, the step of verifying the digital signature using the evaluated at least one mathematical function is not executed.

In some embodiments, the digital signature is of an elliptic curve digital signature type. The mathematical function corresponds to a scalar-point multiplication constructed upon the elliptic curve group operation of point addition. At least one processing step implements an addition of two points of the curve.

In some embodiments, the digital signature comprises a first half and a second half, the second half being a function of a private key. The step of receiving comprises receiving the first half and a first additional data function of an invert of the second half.

In some embodiments, the digital signature comprises a first half and a second half. The second half is a function of a private key. The step of receiving comprises receiving at least one second additional data function of a result of an operation belonging to the group comprising:

- a product between the first half and an invert of the second half; and
- a product between a hash of the message and the invert of the second half.

The step of verifying the digital signature is further based on the at least one second additional data.

In some embodiments, the step of receiving comprises receiving at least one third additional data function of a result of an operation belonging to the group comprising:

- a sum between the generator of the elliptic curve and a public key; and
- a difference between the generator of the elliptic curve and the public key.

The verifying the digital signature is further based on the at least one third additional data.

In some embodiments, the digital signature is of a hash-based signature type. The mathematical function corresponds to a composition of hash functions. At least one processing step implements one of the hash functions.

In some embodiments, the digital signature is of a module-lattice-based digital signature algorithm type. The mathematical function corresponds to a number theory transformation. At least one processing step implementing one stage of a lattice of the transformation.

Another aspect of the present disclosure relates to a computer program product comprising program code instructions for implementing the above-mentioned method for generating a digital signature associated to a digital message (in any of the different embodiments discussed above), when the program is executed on a computer or a processor.

Another aspect of the present disclosure relates to a computer program product comprising program code instructions for implementing the above-mentioned method for verifying a digital signature associated to a digital message (in any of the different embodiments discussed above), when the program is executed on a computer or a processor.

Another aspect of the present disclosure relates to an electronic device comprising means configured for executing all or part of the steps of the above-mentioned method for generating a digital signature associated to a digital message (in any of the different embodiments discussed above). Thus, the features and advantages of this device are the same as those of the corresponding steps of said method. Therefore, they are not detailed any further.

Another aspect of the present disclosure relates to an electronic device comprising means configured for executing all or part of the steps of the above-mentioned method for verifying a digital signature associated to a digital message (in any of the different embodiments discussed above). Thus, the features and advantages of this device are the same as those of the corresponding steps of said method. Therefore, they are not detailed any further.

## 4. LIST OF FIGURES

Other features and advantages of embodiments shall appear from the following description, given by way of indicative and non-exhaustive examples and from the appended drawings, of which:

- Figure 1 illustrates a first apparatus comprising a first electronic device configured for generating a digital signature associated to a digital message to be sent to a second apparatus, the digital signature being verified by a second electronic device implemented in the second apparatus, according to one embodiment of the present disclosure;
- Figure 2 illustrates a flowchart of a method for generating a digital signature associated to a digital message as executed by the first electronic device of Figure 1 according to one embodiment of the present disclosure;
- Figure 3 illustrates a flowchart of a method for verifying a digital signature associated to a digital message as executed by the second electronic device of Figure 1 according to one embodiment of the present disclosure;
- Figure 4 illustrates a lattice representing a number theory transformation (NTT) as used in ML-DSA based on CRYSTALS-Dilithium algorithm according to one embodiment of the present disclosure;

- Figure 5 illustrates an example of the structural blocks of the first electronic device of Figure 1 allowing steps of the method of Figure 2 to be executed according to one embodiment of the present disclosure;

- Figure 6 illustrates an example of the structural blocks of the second electronic device of Figure 1 allowing steps of the method of Figure 3 to be executed according to one embodiment of the present disclosure;

- Figure 7 illustrates an example of the structural blocks of the second electronic device of Figure 1 allowing steps of the method of Figure 3 to be executed according to another embodiment of the present disclosure;

- Figure 8 illustrates an example of the structural blocks of a modulo p multiplier based on Barrett reduction as used in the ladder implemented in the device of Figure 7 according to one embodiment of the present disclosure;

- Figure 9a illustrates an example of the structural blocks of a point doubling of the ladder implemented in the device of Figure 7 according to one embodiment of the present disclosure; and

- Figure 9b illustrates an example of the structural blocks of a differential point addition of the ladder implemented in the device of Figure 7 according to one embodiment of the present disclosure.

## 5. DETAILED DESCRIPTION

In all of the figures of the present document, the same numerical reference signs designate similar elements and steps.

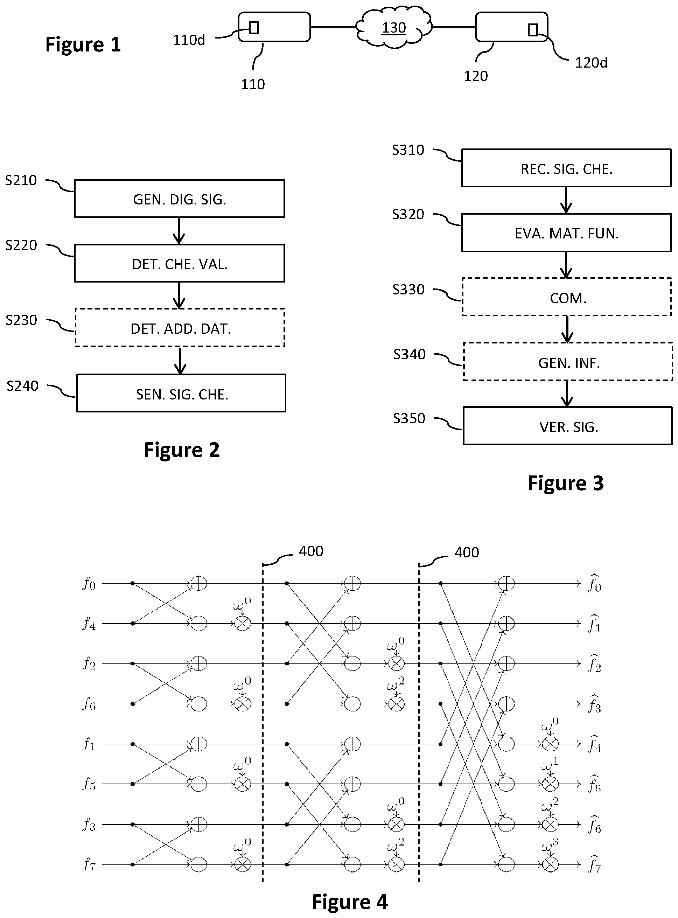

Referring now to **figure 1**, we describe a first apparatus 110 comprising a first electronic device 110d configured for generating a digital signature associated to a digital message to be sent to a second apparatus 120, the digital signature being verified by a second electronic device 120d implemented in the second apparatus 120, according to one embodiment of the present disclosure.

For instance, the first apparatus 110 is a car that needs to send the digital message to another car here in the form of the second apparatus 120. In another example, the first apparatus 110 is a server of a content provider that needs to send the digital message (e.g. comprising one or more chunk(s) of a content) to a receiver here in the form of the second apparatus 120. In yet another example, the first apparatus 110 is a server in a blockchain that needs to send the digital message to another server in the blockchain here in the form of the second apparatus 120.

Back to figure 1, the first apparatus 110 is communicatively connected to the second apparatus 120 through a communications network 130 implementing wired broadband communications links, e.g. xDSL communications links. However, in some embodiments, the communications network 130 implements wireless communications links. In such cases, the communications network 130 is e.g. based on a cellular protocol (e.g. a 3GPP 2G, 3G, 4G or 5G protocol) or on a WiMAX protocol.

Back to figure 1, the digital message sent by the first apparatus 110 is associated to a digital signature. Within the scope of the present disclosure, the verification of the digital signature involves an evaluation of at least one mathematical function defined as a sequence of processing steps. A result of a given processing step in the sequence is used as an input for a processing step following the given processing step in the sequence. The processing steps thus form a daisy chain using the result of a given processing step in the chain as the input for the next processing step in the chain.

As detailed below in relation with figure 2 and figure 3, the mathematical function depends on the digital signature scheme considered. In the same way, depending on the embodiment, all or part of the signature is sent to the second apparatus 120 for verification.

In order to reduce the latency during the verification of the digital signature by the second apparatus 120, the first apparatus 110 executes the method for generating a digital signature of figure 2. More precisely, the first apparatus 110 determines at least one checkpoint value corresponding to an expected output of a respective processing step of the sequence defining the considered mathematical function. Such checkpoint value is sent to the second apparatus 120 for allowing the second apparatus 120 to implement as independent processes executed in parallel the processing steps that use as an input a respective checkpoint value.

Referring now to **figure 2**, we describe a method for generating a digital signature associated to a digital message as executed by the first apparatus 110 according to one embodiment of the present disclosure.

In a **step S210**, the first apparatus 110 generates the digital signature of the digital message. As discussed above, the verification of the digital signature involves an evaluation of at least one mathematical function defined as a sequence of processing steps. A result of a given processing step in the sequence being used as an input for a processing step following the given processing step in the sequence.

In a **step S220**, the first apparatus 110 determines at least one checkpoint value corresponding to an expected output of a respective processing step.

## ECDSA case

For instance, in the ECDSA case, a Short Weierstrass elliptic curve E defined over a prime field $\mathbb{F}_p$ is a set of points $p = (x, y)$ where $x$ and $y$ belong to $\mathbb{F}_p$ and satisfy the equation curve $E$, together with the *point of infinity* denoted by $O$:

$$E: \; y^2 = x^3 + ax + b \qquad (1)$$

where the parameters $a, b \in \mathbb{F}_p$ are such that the discriminant $\Delta = 4a^3 + 27b^2$ is not equal to zero modulo $p$. The group law of elliptic curves is defined by the addition of two points on the curve:

$$x_3 = \left(\frac{y_2 - y_1}{x_2 - x_1}\right)^2 - x_1 - x_2 \; and \; y_3 = \left(\frac{y_2 - y_1}{x_2 - x_1}\right)(x_1 - x_3) - y_1 \qquad (2)$$

The double of a point is obtained as:

$$x_3 = \left(\frac{3x_1^2 + a}{2y_1}\right)^2 - 2x_1 \; and \; y_3 = \left(\frac{3x_1^2 + a}{2y_1}\right)(x_1 - x_3) - y_1 \qquad (3)$$

To construct cryptographic schemes, domain parameters $D = \{p, a, b, G, n, h\}$ must be defined with $p, a, b$ as above and with the following additional elements:

- A *base point G,* defined by its affine coordinates $(x_G, y_G)$, which is a point of $E(\mathbb{F}_p)$ with prime order;
- The order $n$ of $G$;
- The *co-factor* $h = \frac{E(\mathbb{F}_p)}{n}$ .

The operation called *scalar point multiplication* is constructed upon the elliptic curve group operation of point addition:

$$R = [k]P \qquad (4)$$

where $k$ is an integer and $P$ a point of $E(\mathbb{F}_p)$ .

Given the ECDSA domain parameters $D_{ECDSA} = \{q, a, b, G, n, h\}$, the key pair $(d, Q)$ with $Q = [d]G$ and the required hash function $H(.)$, the process of generating an ECDSA signature is e.g. given by the following algorithm (**Algorithm 1**):

```
Input: D_ECDSA, private key d, message m
Output: Signature (r, s) or ⊥ in case of failure
    k ←$ [1, n − 1] (uniformly random sampling)
    R = [k]G
    r = x_R mod n
    e = H(m), z = L(e) (the integer represented by the leftmost ⌈log₂(n)⌉ bits of e)
    s = k⁻¹ (z + rd) mod n
    if r == 0 or s == 0 then
        return ⊥
    else
        return (r, s)
    end if
```

Conversely, the process of verifying the generated signature $(r, s)$ is given by the following algorithm (**Algorithm**

2):

$$\begin{aligned}
&\textbf{Input: } D_{ECDSA}, \text{ public key } Q, \text{ message } m, \text{ signature } (r,s)\\
&\textbf{Output: } \text{True or False}\\
&\quad e = H(m),\ z = L(e) \text{ (the integer represented by the leftmost } \lceil \log_2(n)\rceil \text{ bits of } e)\\
&\quad u_1 = zs^{-1} \bmod n\\
&\quad u_2 = rs^{-1} \bmod n\\
&\quad R = [u_1]G + [u_2]Q\\
&\quad \textbf{if } r == x_R \bmod n \textbf{ then}\\
&\qquad \textbf{return } \text{True}\\
&\quad \textbf{else}\\
&\qquad \textbf{return } \text{False}\\
&\quad \textbf{end if}
\end{aligned}$$

In order to reduce the latency in the verification of the message, we turn our attention to minimizing the latency of the scalar-point multiplications.

The key consideration here is that the task of the verifier is not to perform the double scalar-point multiplication. The goal of the verifier is rather to *verify* that the result of the double scalar point multiplication is indeed as expected, i.e. that the *x* coordinate of the resulting point is equal to *r* modulo *r*. For instance, the signer or a previous verifier may have gone through the process before, at generation time (this is a step which is performed in many systems to verify the consistency of the generated signature, even if not mandatory) or later on. In such case, the signer (or a third party) can attach to the signature a certain quantity of additional data to ease further verification runs.

In order to illustrate such behavior in a non-limitative way, let's first analyze the case of a single scalar-point multiplication for the sake of simplicity: if the scalar is not secret (as in the case of signature verification), non-regular algorithms can be employed. Let us consider the most basic technique, the double and add algorithm with no pre-computation (right to left version). The goal is to compute [*s*]*P*, given the binary representation of the *m*-bit scalar s as

$$s = \sum_0^{m-1} s_i 2^i$$

. Having denoted *O* the point at infinity, this works as in the following algorithm (**Algorithm 3**):

$$\begin{aligned}
&\textbf{Input: } \text{point } P,\ m\text{-bit scalar } s\\
&\textbf{Output: } R = [s]P\\
&\quad R = O, T = P\\
&\quad \textbf{for } i = 0 \text{ to } m-1 \textbf{ do}\\
&\qquad \textbf{if } s_i == 1 \textbf{ then}\\
&\qquad\quad R = R + T\\
&\qquad \textbf{end if}\\
&\qquad T = 2T\\
&\quad \textbf{end for}\\
&\quad \textbf{return } R
\end{aligned}$$

We observe that this is a sequential process. However, if the algorithm above has been already executed once, values of *T* and *R* at the end of each *i*-th iteration of the loop can be saved as checkpoint values. Let us denote them as $T_i$, $R_i$, with $T_{-1} = P$ and $R_{-1} = O$. The value of $R_{m-1}$ is the result of the computation, i.e. $R_{m-1} = R$, and the value $T_{m-1}$ is not used. If someone then needs to verify the correctness of the computation given all the checkpoint values, he/she can do it as in the following algorithm (**Algorithm 4**):

$$\begin{aligned}
&\textbf{Input: } \text{point } P, m\text{-bit scalar } s, \text{ checkpoints } T_i, R_i \text{ with } i \in (0, m-1)\\
&\textbf{Output: } f = True \text{ if } R_{m-1} == [s]P \text{ else } f = False\\
&\quad f = True\\
&\quad \textbf{for } i = 0 \textbf{ to } m-1 \textbf{ do}\\
&\quad\quad \textbf{if } s_i == 1 \textbf{ then}\\
&\quad\quad\quad R_v = R_{i-1} + T_{i-1}\\
&\quad\quad \textbf{else}\\
&\quad\quad\quad R_v = R_{i-1}\\
&\quad\quad \textbf{end if}\\
&\quad\quad T_v = 2T_{i-1}\\
&\quad\quad \textbf{if } R_v \neq R_i \textbf{ or } T_v \neq T_i \textbf{ then}\\
&\quad\quad\quad f = False\\
&\quad\quad \textbf{end if}\\
&\quad \textbf{end for}\\
&\quad \textbf{return } f
\end{aligned}$$

We have switched from a fully sequential to a fully parallel method, because all iterations of the loop in Algorithm 4 can be executed in parallel. The returned result is true e.g. if all the partial results are true. If the verifier has sufficient computing resources, he can dedicate one resource to each iteration. The latency of the verification process is limited to that of a single point addition (or doubling), because for each value of $i$ the computations of $R_v$ and $T_v$ can be done in parallel. Essentially, all the verifier's computing resources validate in parallel that the doubling chain $T_i$ and the addition chain $R_i$ are consistent with the values of the bits of the scalars ($u_1$, $u_2$).

The case of the double scalar-point multiplication is not different. We can just take any known algorithm to compute it, save all its intermediate values as checkpoint values and attach them to the signature. The verifier then performs the verification of all iterations in parallel using provided data and sufficient computing resources. This means that the latency of the signature verification algorithm can be as low as a single point addition operation.

The number of checkpoint values can be freely chosen. Instead of verifying single iterations of the ladder, computing resources can rather work on sections, each comprising several adjacent iterations. This is an effective way to tune the parallelization factor. The signer can choose how many checkpoint values to give to the verifier to ease his task, e.g. keeping signature size to a reasonable value. Note that whenever a checkpoint value remains constant from one processing step to the next, i.e. that $R_i = R_{i-1}$ in the algorithms above, there is actually no need to append the corresponding checkpoint value (we just need to signal the fact that $R_i = R_{i-1}$).

Thus, in the ECDSA case, the verification involves at least one mathematical function corresponding to a scalar-point multiplication constructed upon the elliptic curve group operation of point addition, at least one processing step implementing an addition of two points of the curve.

The same approach holds for other digital signature scheme wherein the verification involves the evaluation of such scalar-point multiplication. This is the case e.g. with EdDSA signatures, or Schnorr signatures.

## Hash-based signature case

For hash-based signatures, the task is simple as there are many hash chains to be computed during verification. In general, the verification of a sequential hash chain $h = H(H(H(H(x))))$ can be parallelized with the aid of a checkpoint value e.g. of the form $h_{int} = H(Hex))$. In this example, we indeed get that $h = H(H(h_{int}))$.

Thus, in the hash-based signatures case, the verification involves at least one mathematical function corresponding to a composition of hash functions, at least one processing step implementing one of the hash functions.

## ML-DSA case

ML-DSA, like e.g. based on. the CRYSTALS-Dilithium algorithm, are lattice-based schemes. In such case, one can identify checkpoint values that can be introduced as intermediate stages in the lattice. More particularly, checkpoint values can be introduced in the intermediate stages of the lattice representing the number theory transformation (NTT). In the non-limitative example of CRYSTALS-Dilithium, in the NTT lattice illustrated in **figure 4**, the checkpoint values are inserted after each stage, as shown by the dashed lines 400 in the picture, to allow for a fully parallel verification of the computation.

Thus, in the ML-DSA case, the verification involves at least one mathematical function corresponding to a NTT, at least one processing step implementing one stage of a lattice of the transformation.

Back to figure 2, in a **step S230**, the first apparatus 110 determines additional data. In a **step S240**, the first apparatus 110 sends, to the second apparatus 120, at least part of the digital signature, the additional data and the at least one checkpoint value.

For instance, reconsidering the ECDSA case, and more particularly the Algorithm 2 shown above, we get that the verification of the signature involves a modular inversion for determining $s^{-1}$.

Modular inversions are computationally quite heavy. Preferably, it should be removed from elliptic curve cryptography (ECC) implementations. However, known ECC libraries still perform such modular inversions e.g. during ECDSA signature verification. Referring to the Algorithm 2 shown above, we get that the first modular inversion operation pops up at the beginning of the verification process, when the verifier needs to compute the two scalars $u_1$, $u_2$ to further compute the point $R$. This requires determining $s^{-1}$ because $u_1 = zs^{-1}$ and $u_2 = rs^{-1}$. However, it can be noted that the value of $s$ itself is not needed for the execution of the Algorithm 2, as its only purpose is to compute $s^{-1}$. Therefore, keeping the size of the signature constant, we could rewrite it as $(r, s^{-1})$ instead of $(r, s)$. In this way, the verifier can simply compute $u_1$, $u_2$ with two modular multiplications, and then proceed with the double-scalar multiplication. This thus further reduces the latency in the verification of the digital signature.

One may think that formatting the signature as $(r, s^{-1})$ puts more work on the generator side, but this is not true. Following the Algorithm 1 shown above, the signer has to perform one inversion to obtain $k^{-1}$ so then he can compute $s = k^{-1}(z + rd)$ with two multiplications and one addition. But the signer could rather directly obtain $s^{-1}$ as $k(z + rd)^{-1}$. This requires again one inversion, two multiplications and one addition, i.e. the same number of operations of same type.

Accordingly, in some embodiments wherein the digital signature is of an EDCSA type, the digital signature comprises a first half (e.g. $r$) and a second half (e.g. $s$), the second half being a function of a private key (e.g. $d$). In some of those embodiments, in step S230, the first apparatus 110 determines a first additional data (e.g. $s^{-1}$) function of an invert of the second half. In step S240, the first apparatus 110 sends to the second apparatus 120 the first half and the first additional data (e.g. the first half $r$ of the signature and the first additional data $s^{-1}$).

However, we may go a step further. Indeed, referring to the Algorithm 2 again, we get that a second modular inversion operation is due to the fact that after computing the point $R = [u_1]G + [u_2]Q$, the verifier needs to check whether $x_R = r$. For the sake of simplicity, $R$ is computed using Jacobian, projective or other inversion-less coordinate representations. It thus seems necessary to go back to the affine representation for $R$, which always requires an inversion. But indeed, given a projective representation for $R = (\hat{x}_R, \hat{y}_R, \hat{z}_R)$, the verifier can simply check if $\hat{x}_R = r\hat{z}_R$ with a simple multiplication. Note that $y_R$ is never used for signature verification and thus it is not strictly necessary to recover it.

Formatting the signature as $(r, s^{-1})$ may not always be possible, for reasons of compatibility. In some embodiments, the signature size can be increased and is stored as $(r, s, u_1, u_2)$, i.e. the original signature extended with the additional data $u_1$, $u_2$. The verifier can then immediately start executing the scalar point multiplication(s). In parallel to that, the verifier may verify that the provided values are such that $u_1 s = z$ and $u_2 s = r$. Indeed, otherwise the additional information in the signature may not be trusted. These two multiplications modulo $n$ can be run in parallel with the scalar-point multiplications and thus in a parallel HW or SW implementation. The total latency of the verification simply reduces to that of computing $(\hat{x}_R, \hat{z}_R)$. This thus further reducing the latency in the verification of the digital signature.

Accordingly, in some embodiments wherein the digital signature is of an EDCSA type, the digital signature comprises a first half (e.g. $r$) and a second half (e.g. $s$), the second half being a function of a private key (e.g. $d$). In some of those embodiments, in step S230, the first apparatus 110 determines at least one second additional data (e.g. $u_1$ and/or $u_2$) function of a result of an operation belonging to the group comprising:

- a product between the first half and an invert of the second half (e.g. $u_1 = zs^{-1}$); and
- a product between a hash of the message and the invert of the second half (e.g. $u_2 = rs^{-1}$).

In step S240, the first apparatus 110 sends to the second apparatus 120 the at least one second additional data.

Reconsidering the ECDSA case, let now consider the case where the verifier uses Shamir's trick (1-bit window) to compute $R$, with affine addition and doubling formulas over a generic short Weierstrass curve. As any curve can be reduced to this form, this technique is universal and applicable to all standard curves. Here we assume for the sake of clarity that the verifier gets the maximum number of checkpoint values, i.e. the results of all the addition and doubling operations. Each checkpoint value coordinate is given in affine form, so this pushes even more work (most of all in terms of inversions) on the generation side.

For the sake of simplicity, we will only use the formulas for the $X$ coordinate. Limiting verification to the $X$ coordinates of the points is not different from the case where a sequential verifier uses an $X$-only ladder to compute the point $R$ and finishes up by verifying that its $X$ coordinate is equal to $r$. In other words, sign ambiguity on the $Y$ coordinates of the intermediate points (i.e. the checkpoint values) and the result can be considered inherent in the signature verification process.

Each iteration of Shamir's trick requires performing an addition with either $O$ (no addition), $G$, $Q$ or $G + Q$ depending on a pair of bits of the two scalars $u_1$, $u_2$, followed by a doubling. There is a checkpoint value for the result of the addition and one for the result of the doubling, so that they can be verified in parallel.

The affine addition formula of Equation (2) can be slightly rewritten as:

$$(x_1 + x_2 + x_3)(x_2 - x_1)^2 = (y_2 - y_1)^2 \qquad (5)$$

The values of $x_1$, $y_1$ and $x_3$ belong to the set of checkpoint values. For each iteration of Shamir's trick, $x_2$, $y_2$ are the coordinates of either $G$, $Q$ or $G + Q$. We define the following additional value:

$$v = (x_2 - x_1)^2 \qquad (6)$$

If $v$ is provided to the verifier together with the checkpoint values coordinates, then two resources can perform in parallel the following checks:

$$\begin{cases} (x_1 + x_2 + x_3)v = (y_2 - y_1)^2 \\ v = (x_2 - x_1)^2 \end{cases} \qquad (7)$$

and we can conclude that all additions are correct if these are both true for each pair of scalar bits. Left and right-hand sides of the equations above have only one field multiplication in the critical path, therefore the total latency is one field multiplication (plus two additions and a comparison).

The verifier may also need to check the coherence of the doubling operations. The affine doubling formula of Equation (3) can be rewritten as (we use redundancy to highlight the number of additions):

$$(x_1 + x_1 + x_3)(y_1 + y_1)^2 = (x_1^2 + x_1^2 + x_1^2 + a)^2 \qquad (8)$$

Similarly to what we did for the addition equation, we can define two values:

$$\begin{cases} t = (y_1 + y_1)^2 \\ w = (x_1^2 + x_1^2 + x_1^2) \end{cases} \qquad (9)$$

so that verifier computing resources just need to check in parallel that:

$$\begin{cases} (x_1 + x_1 + x_3)t = (w + a)^2 \\ t = (y_1 + y_1)^2 \\ w = (x_1^2 + x_1^2 + x_1^2) \end{cases} \qquad (10)$$

again with only one field multiplication, two additions and a comparison in the critical path.

It may also be checked that the provided values of point coordinates are correct. $G$ is a constant and can be considered as parts of the curve parameters, thus fixed in the implementation or provided and verified well in advance. Regarding $Q$, we may verify that it is a valid point on the curve. For instance, we can use an approach similar to the above, using the curve equation along with a slightly extended representation $(x_Q, x_Q^2, y_Q)$. This can also be done with one multiplication latency. For the coordinates of $G + Q$, we can use the approach above for the $X$ coordinate, and a similar one with additional inputs $(y_Q - y_G)^2$ and $(x_Q - x_G)^2$ for the $Y$ coordinate, because related cubic terms appear in the affine addition law. Thus with a few more additional inputs we can fully trust that all input data is valid and consistent without affecting the critical path.

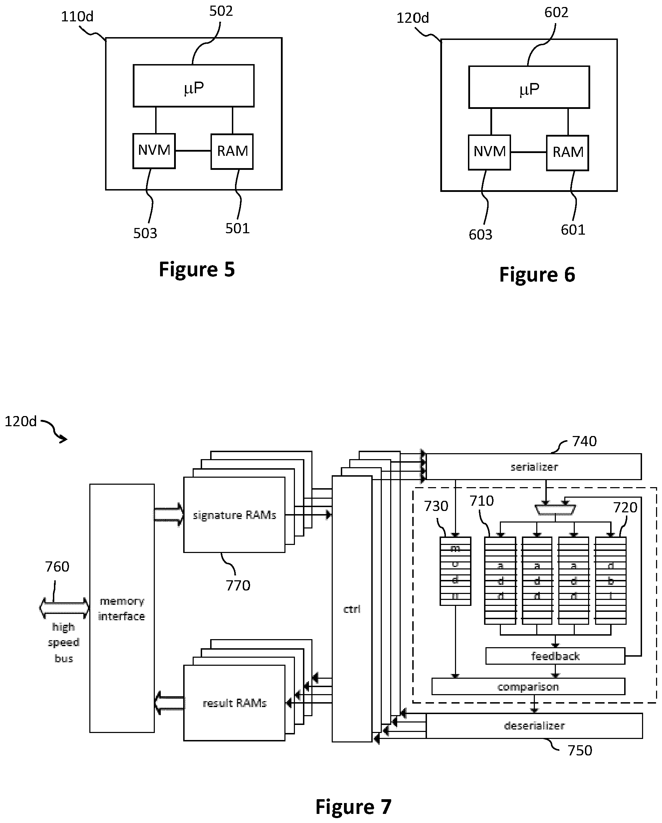

Besides all the checkpoint values $Q$ and $G + Q$ (and possibly with $G - Q$ as in the case of the Akishita's ladder discussed below in relation with figure 7), the verifier may be provided with an extended signature $(r, s, u_1, u_2)$. This allows the verifier to begin immediately with all the parallel verifications described above (modulo $p$) and also with the two following parallel verifications (modulo $n$):

$$\begin{cases} u_1 s = z \\ u_2 s = r \end{cases} \qquad (11)$$

Since these have a latency of one field multiplication and a comparison, we can conclude that the overall signature verification process latency is limited to one field multiplication and two field additions (modulo $p$) plus one comparison. This thus further reduces the latency in the verification of the digital signature.

Accordingly, in some embodiments wherein the digital signature is of an EDCSA type, the digital signature comprises a first half (e.g. $r$) and a second half (e.g. $s$), the second half being a function of a private key (e.g. $d$). In some of those embodiments, in step S230, the first apparatus 110 determines at least one third additional data function of a result of an operation belonging to the group comprising:

- a sum between the generator of the elliptic curve and a public key (e.g. $G + Q$); and
- a difference between the generator of the elliptic curve and the public key (e.g. $G - Q$).

In step S240, the first apparatus 110 sends to the second apparatus 120, in addition to the at least one second additional data, the at least one third additional data.

However, in some embodiments, the step S230 is not executed. In those embodiments, in step S240, the first apparatus 110 does not send any of the first, second and third additional data to the second apparatus 120. In this case, in step S240, the first apparatus 110 sends to the second apparatus 120 the digital signature and the checkpoint value(s).

Referring now to **figure 3**, we describe a method for verifying a digital signature associated to a digital message as executed by the second apparatus 120 according to one embodiment of the present disclosure.

More particularly, as discussed above, the verification of the digital signature involves an evaluation of at least one mathematical function defined as a sequence of processing steps. A result of a given processing step in the sequence is used as an input for a processing step following the given processing step in the sequence.

In a **step S310**, the second apparatus 120 receives, from the first apparatus 110, at least part of the digital signature and at least one checkpoint value corresponding to an expected output of a respective processing step.

In a **step S320**, the second apparatus 120 evaluates the at least one mathematical function using the received at least one checkpoint value as an input for a processing step following the respective processing step in the sequence. More particularly, a first processing step in the sequence and at least one processing step using as an input a respective checkpoint value are independently executed as parallel processes. Thus, the latency in the verification is reduced by executing in parallel rather than sequentially the processing steps that use as an input a respective checkpoint value.

Back to figure 3, in a **step S330**, for at least one received checkpoint value corresponding to an expected output of a respective processing step, the second apparatus 120 compares the expected output with an output of an execution of the respective processing step.

In a **step S340**, if the output and the expected output are different outputs, the second apparatus 120 generates an information indicative that the received at least one checkpoint value is inconsistent with the signature.

Thus, the coherence of the checkpoint values is checked during the verification process. For instance, if an inconsistency between the output and the expected output is detected, the process stops and the next step S350 of verifying the digital signature using the evaluated at least one mathematical function is not executed. Conversely, if the output and the expected output are same outputs, the second apparatus 120 executes the next step S350. However, in some embodiments, the steps S330 and S340 are not executed and the step S350 is systematically executed.

Back to figure 3, in the **step S350**, the second apparatus 120 verifies the digital signature based on the evaluated at least one mathematical function.

Reconsidering the examples given above in relation with figure 2, we thus get that in some embodiments, the digital signature is of an EDCSA type. The mathematical function corresponds to a scalar-point multiplication constructed upon the elliptic curve group operation of point addition, at least one processing step implementing an addition of two points of the curve.

In some of those embodiments, the digital signature comprises a first half (e.g. $r$) and a second half (e.g. $s$), the second half being a function of a private key (e.g. $d$). In some of those embodiments, in the step S310, the second apparatus 120 receives the first half and a first additional data function of an invert of the second half (e.g. the first half r of the signature and the first additional data $s^{-1}$).

Conversely, in some embodiments wherein the digital signature is of an EDCSA type, the digital signature comprises a first half (e.g. $r$) and a second half (e.g. $s$), the second half being a function of a private key (e.g. $d$). In some of those embodiments, in the step S310, the second apparatus 120 receives at least one second additional data (e.g. $u_1$ and/or $u_2$) function of a result of an operation belonging to the group comprising:

- a product between the first half and an invert of the second half (e.g. $u_1 = zs^{-1}$); and
- a product between a hash of the message and the invert of the second half (e.g. $u_2 = rs^{-1}$).

In step S350, the second apparatus 120 verifies the digital signature based on the at least one second additional data.

In some of those embodiments, in the step S310, the second apparatus 120 further receives at least one third additional data function of a result of an operation belonging to the group comprising:

- a sum between the generator of the elliptic curve and a public key (e.g. *G* + *Q*); and
- a difference between the generator of the elliptic curve and the public key (e.g. *G - Q*).

In step S350, the second apparatus 120 verifies the digital signature further based on the at least one third additional data in addition to the at least one second additional data.

Alternatively, still referring to the examples given above in relation with figure 2, we get that in some embodiments the digital signature is of a hash-based signature type. The mathematical function corresponds to a composition of hash functions, at least one processing step implementing one of the hash functions.

In the same way, in some embodiments, the digital signature is of a ML-DSA type. The mathematical function corresponds to a NTT, at least one processing step implementing one stage of a lattice of the transformation.

In order to be able to implement all or part of the steps of the method for generating a digital signature associated to a digital message in the various embodiments disclosed above in relationship with figure 2, in some embodiments the first electronic device 110d comprises (**figure 5**):

- a non-volatile memory (NVM) 503 (e.g. a read-only memory (ROM), a hard disk, a flash memory, etc.);
- a volatile memory 501 (e.g. a random-access memory or RAM) and a processor 502.

The non-volatile memory 503 is a non-transitory computer-readable carrier medium. It stores executable program code instructions, which are executed by the processor 502 in order to enable implementation of some steps of the method described above (method for generating a digital signature associated to a digital message) in the various embodiments disclosed in relationship with figure 2.

Upon initialization, the aforementioned program code instructions are transferred from the non-volatile memory 503 to the volatile memory 501 so as to be executed by the processor 502. The volatile memory 501 likewise includes registers for storing the variables and parameters required for this execution.

The steps of the method for generating a digital signature associated to a digital message may be implemented equally well:

- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In order to be able to implement all or part of the steps of the method for verifying a digital signature associated to a digital message in the various embodiments disclosed above in relationship with figure 3, in some embodiments the second electronic device 120d comprises (**figure 6**):

- a non-volatile memory (NVM) 603 (e.g. a read-only memory (ROM), a hard disk, a flash memory, etc.);
- a volatile memory 601 (e.g. a random-access memory or RAM) and a processor 602.

The non-volatile memory 603 is a non-transitory computer-readable carrier medium. It stores executable program code instructions, which are executed by the processor 602 in order to enable implementation of some steps of the method described above (method for verifying a digital signature associated to a digital message) in the various embodiments disclosed in relationship with figure 3.

Upon initialization, the aforementioned program code instructions are transferred from the non-volatile memory 603 to the volatile memory 601 so as to be executed by the processor 602. The volatile memory 601 likewise includes registers for storing the variables and parameters required for this execution.

The steps of the method for verifying a digital signature associated to a digital message may be implemented equally well:

- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or

- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

Referring now to **Figure 7**, we describe an example of the structural blocks of the second electronic device 120d according to another embodiment of the present disclosure.

Reconsidering the ECDSA case, the implementation of the second electronic device 120d can be optimized following the assumptions that the second electronic device 120d receives from the first apparatus 110:

- A standard signature payload ($r, s, z, Q$) wherein $Q$ is the signer's public key and $z$ the field element corresponding to the hashed message;
- An extended signature payload consisting of ($u_1, u_2, G + Q, G - Q$). As previously explained, this allows reducing the latency to that of the two scalar-point multiplications and helps supporting different algorithms for its execution. Note that the coordinates of $G + Q$ and $G - Q$ need only be computed once (e.g. at key generation time), since they depend only on the public key of the signer. Their inclusion in the signature thus does not create additional work when each signature is generated; and
- A certain amount of checkpoint values, depending on the targeted level of parallelization. For simplicity, we assume that the scalars are divided in a number of equallength sections whose size is a power of two. For a 256-bits curve, we can have 1, 2, 4, 8, 16, 32, 64, 128 or 256 sections (of, respectively, 256, 128, 64, 32, 16, 8, 4, 2 and 1 bits). A checkpoint value is always inserted between two sections (it marks at the same time the beginning of a new section and the end of the preceding one). The end of the MS section is $r$ while the beginning of the LS section is the setup condition for the double scalar multiplication algorithm, usually including points in the set {$O, G, Q, G + Q, G - Q$}. If the number of sections is 1, there is no checkpoint value and this represents the usual sequential flow for scalar point multiplication (i.e. we do not exploit parallelism on the verifier's side).

This allows reconsidering the Akishita's ladder for implementing the second electronic device 120d.

More particularly, this ladder works simultaneously on two scalars, always performing differential addition with respect to one of the points $Q, G + Q, G - Q$. This means we can keep a critical path of 3 field multiplications without the burden of the final point addition. Its state consists of 3 points $T_0, T_1, T_2$ so it needs one less point storage compared to a double Montgomery ladder.

Akishita's ladder is applicable to Montgomery type curves. However, nothing prevents application to the most generic curve type, i.e. short Weierstrass curves.

The ladder needs the two points $G + Q, G - Q$ in affine form as inputs. As previously discussed, this data can be included in the extended signature payload. These values can be easily checked by computing one differential addition and one doubling in parallel. The first adds $G + Q$ and $G - Q$ (with difference equal to the hardcoded value $2G$) to obtain $2Q$. $Q - G$ can be simply obtained by inverting the sign of $G - Q$. The second operation doubles $Q$ and compares the result with that of the addition. Conveniently, both operations and the checks are executed using the same logic of the ladder, as will be explained below.

Akishita's original ladder requires a preamble where the two scalars are scanned to find the most significant pair of non-zero bits (timing of this phase is thus variable) and an epilogue where different actions are taken based on the value of the two least significant bits of the scalars. This somewhat breaks the regular flow of operations when a lot of signatures are checked concurrently by a pipelined implementation. These special steps are actually not needed, and the ladder can be re-written in a completely regular form by avoiding this initial and final processing. The re-writing works by prepending and appending one 0 bit to both scalars, extending by 2 their bitlength as shown in the following algorithm (**Algorithm 5**) wherein $u_1[i]$ represents the $i$-th bit of $u_1$:

**Input:** points $Q, G + Q, G - Q$ and $m$-bit scalars $u_1 = (u_1[m-1] \cdots u_1[0]), u_2 = (u_2[m-1] \cdots u_2[0])$

**Output:** $R = [u_1]G + [u_2]Q$

$T_0 = O, T_1 = Q, T_2 = G$

$k[m] = 0, k[-1] = 0, k[i] = u_1[i]$ for $0 \le i \le m - 1$

$l[m] = 0, l[-1] = 0, l[i] = u_2[i]$ for $0 \le i \le m - 1$

**for** $i = m$ **to** 0 **step** -1 **do**

    get scalar bits slice $(k[i], l[i], k[i-1], l[i-1])$

    update $T_0, T_1, T_2$ according to Table 1

**end for**

**return** $R = T_0$

**Table 1** below contains the different point operations to be performed at each iteration of the "for" loop according to the value of the scalar bits slice. Each column contains the new value of the related point. The value in parenthesis for each differential addition operation is the point difference value to be used. This ladder always performs m + 1 iterations.

**Table 1**: Akishita's ladder state updating

| Scalar bits slice | $T_0$ | $T_1$ | $T_2$ |
|---|---|---|---|
| (0, 0, 0, 0) | $2T_0$ | $T_1 + T_0$ (Q) | $T_2 + T_0$ (G) |
| (0, 0, 0, 1) | $2T_0$ | $T_1 + T_0$ (Q) | $T_2 + T_1$ (G-Q) |
| (0, 0, 1, 0) | $2T_0$ | $T_2 + T_0$ (G) | $T_2 + T_1$ (G-Q) |
| (0, 0, 1, 1) | $T_1 + T_0$ (Q) | $T_2 + T_0$ (G) | $T_2 + T_1$ (G-Q) |
| (0, 1, 0, 0) | $T_1 + T_0$ (Q) | $2T_1$ | $T_2 + T_0$ (G+Q) |
| (0, 1, 0, 1) | $T_1 + T_0$ (Q) | $2T_1$ | $T_2 + T_1$ (G) |
| (0, 1, 1, 0) | $T_1 + T_0$ (Q) | $T_2 + T_0$ (G+Q) | $T_2 + T_1$ (G) |
| (0, 1, 1, 1) | $2T_1$ | $T_2 + T_0$ (G+Q) | $T_2 + T_1$ (G) |
| (1, 0, 0, 0) | $T_1 + T_0$ (G) | $T_2 + T_0$ (G+Q) | $2T_1$ |
| (1, 0, 0, 1) | $T_1 + T_0$ (G) | $T_2 + T_0$ (G+Q) | $T_2 + T_1$ (Q) |
| (1, 0, 1, 0) | $T_1 + T_0$ (G) | $2T_1$ | $T_2 + T_1$ (Q) |
| (1, 0, 1, 1) | $T_2 + T_0$ (G+Q) | $2T_1$ | $T_2 + T_1$ (Q) |
| (1, 1, 0, 0) | $T_1 + T_0$ (G-Q) | $T_2 + T_0$ (G) | $T_2 + T_1$ (Q) |
| (1, 1, 0, 1) | $T_1 + T_6$ (G-Q) | $T_2 + T_0$ (G) | $2T_2$ |
| (1, 1, 1, 0) | $T_1 + T_0$ (G-Q) | $T_2 + T_1$ (Q) | $2T_2$ |
| (1, 1, 1, 1) | $T_2 + T_0$ (G) | $T_2 + T_1$ (Q) | $2T_2$ |

Based on the above, we can sketch the design of a fine-grain pipelined hardware performing one iteration of the ladder's "for" loop, and use it in iterative fashion for the necessary number of times. Because of the pipeline, the hardware is able to operate on many sections at the same time. Sections may belong to the same signature (with checkpoint values) or to different ones, thus enforcing parallel computation in all possible cases. Deep pipelining is a direct consequence of the fact that high-radix multipliers need long pipelines to operate at high frequencies in hardware. This brings the benefit that throughput can be significantly increased with a slight compromise on the minimum reachable latency.

Each signature has a certain degree of parallelization possible, given by the number of checkpoint values inserted as additional data. All these sections can immediately enter the pipeline. They will go through the necessary number of iterations to compute their final points. For each signature, one more point addition and one more point doubling will also enter the pipeline, to verify the correctness of the *G + Q* and *G - Q* inputs.

Aside of the ladder pipeline, we can instantiate one multiplier 730 modulo *n*, to verify the consistency of parameters in the extended signature payload as shown in equation (11). The latency of the modulo *n* check is one field multiplication, i.e. at most one third of the latency of one ladder iteration, and there are two checks to be performed per each signature. Therefore, one multiplier 730 is sufficient to perform them in parallel with the ladder execution, even in the case of minimum latency. The minimum reachable latency for verifying a signature on a m-bit curve corresponds to the case of m checkpoint values and is roughly equal to $2 + m + 4l$ clock cycles, where $l$ is the number of pipeline stages of one modulo $p$ multiplier.

Each iteration of the ladder (operating on a scalar bits slice) implements the execution of up to three point additions and one doubling, which can be done in parallel. The main pipeline can thus contain three instances of a point addition circuit 710 and one instance of a point doubling circuit 720. As these have the same critical path of three multiplications, we assume they have the same number of pipeline stages (any small difference can be leveled out using dummy registers). Usage of these blocks is iterative. When all bits of a section have been consumed, the resulting point is forwarded to a final stage where a multiplication and a comparison are done in order to check its correctness (as described above in relation with figure 2), otherwise data is fed back into the pipeline.

As the number of pipeline stages increases, clock frequency and number of registers increase accordingly. Since clock frequency cannot grow much above 500 MHz on current FPGAs, a trade-off needs to be considered that also fits in the logic resources e.g. of a single VU9P FPGA. For instance, if we choose m stages in the ladder pipeline, where $m$ is the maximum bit size of the supported curves, this brings the advantage of a constant throughput across all signature sizes, roughly equal to one verified signature every $m$ clock cycles. The minimum achievable latency is about $2 + \frac{7}{3}m$ clock cycles.

While the point operations run at high clock frequency, the rest of the logic can run at a lower clock frequency. The clock can be decreased by e.g. a factor $N$ outside the pipeline if we instantiate the logic managing the flow of signatures $N$ times. Each control logic block will deal with the same number of sections (and potentially a different number of signatures depending on the number of checkpoint values of each one), and insert them in the ladder pipeline as if it was operating at the slow clock rate (but with a latency reduced by a factor $N$). A serializer 740 and a deserializer 750 can perform the serial-parallel conversions of data before and after the ladder pipeline. This brings the advantage of keeping a high clock rate for the core arithmetic logic blocks (the dashed line marks the logic operating at high clock frequency in figure 7) and a relaxed clock for the control part.

The core logic can be interfaced with the external world via a high-speed bus 760 (e.g. PCI Express) and the host CPU can manage the flows of signatures and results by performing memory accesses. $N$ control logic blocks can then process the signatures in parallel. Assuming a core logic clock frequency of 500 MHz, an interface clock of 125 MHz ($N = 4$) and an ECC curve of 256 bits, the sustained throughput of the architecture is around 1.8 Million signature verifications per second corresponding to an interface data rate of 3.9 Gbit/s. Signatures with the highest number of checkpoint values will be verified with a latency of $1.2 \mu s$.

Going a step forward, we can detail some examples of implementation choices for having the architecture described above in relation with figure 7 that can fit and run on a single FPGA, e.g. like the VU9P Xilinx FPGA device which is widely used in solutions for cloud-computing platform.

Conversely, the choice of the curve has been made mainly because of its interest for blockchain applications. However, the presented architecture can be retargeted on any elliptic curve expressed (or expressible) in short Weierstrass form.

More particularly, in one example of implementation we rely on fine-grain pipelining of the modular arithmetic operators. The target can be a frequency of 500 MHz for the arithmetic core clock, and 125 MHz ($N = 4$) for the control logic and the interfaces.

For two-inputs modular addition and subtraction, provided that the inputs are already reduced, these operators consist in one integer addition/subtraction, followed by a subtraction/addition with the modulus, and a selection based on the MS bits of the two results. Techniques to design low-latency adders are well known (e.g. prefix adders) and these operators can profit from the presence of fast carry chains on the FPGA. However, the task of pipelining them can be tedious, error prone and very long.

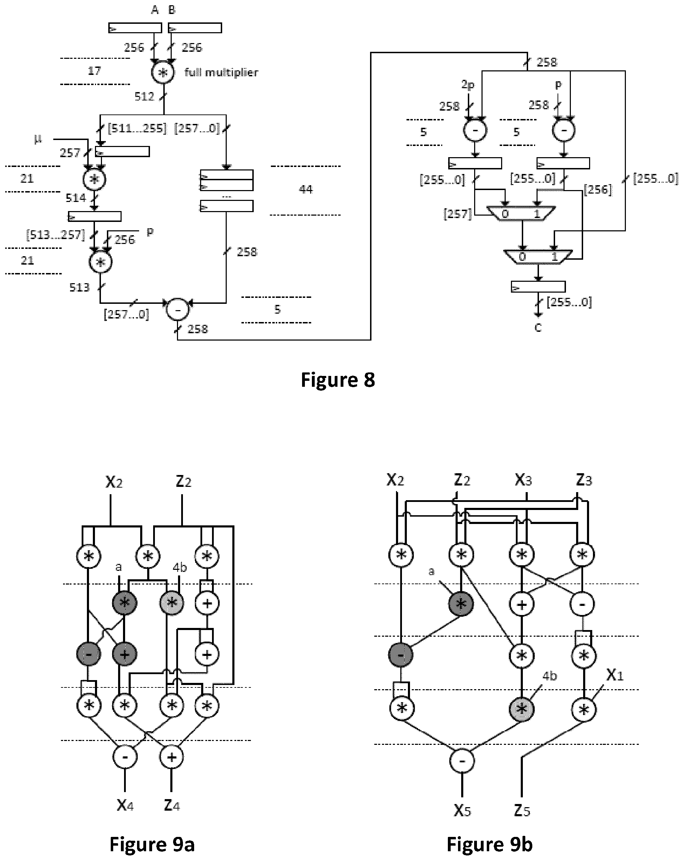

For field multipliers, first we have to select the multiplication algorithm. Reduced radix Montgomery multiplication is often used in HW implementations of ECC systems, because its iterative nature can offer several trade-offs between speed and size. However, it has the drawback of requiring domain conversions. Since the primary goal is low latency, we can choose to perform full-radix multiplication followed by full-radix Barrett reduction. This modular reduction algorithm is much more adapted to fast parallel implementations, and uses only constant-multipliers. For this reason, usage of DSP cells can be confined to the full multiplier. **Figure 8** depicts the architecture of the field multiplier based on Barrett reduction computing $C = AB \bmod p$. The $\mu$ constant is equal to $\left\lfloor \frac{2^{512}}{p} \right\rfloor$.

Keeping the target frequency at 550 MHz, we can have 74 pipeline stages when mapped and routed with a 2 ns clock on the VU9P device. Such modulo p multiplier uses 13051 LUTs, 34208 FFs and 505 165 DSP cells. The modulo p multiplier is obtained by simply using different constants and takes 29006 LUTs, 87730 FFs, 165 DSP cells and 107 pipeline stages. The significant difference is due to the highly regular expression for p, which has just six bits equal to 0, all others being 1. This is indeed an important factor for constant multipliers, because they do not employ small-radix multipliers but rather consist of CSA trees whose synthesis depends on the constant value.

For doubling circuits and differential point addition, examples of implementations are given in **figure 9a** and **figure 9b** respectively.

More particularly, the circuit in figure 9a computes the doubling $P_4 = 2P_2$ in projective form, and the circuit in figure 9b computes the differential addition $P_5 = P_2 + P_3$ using the affine X-coordinate of the difference point $P_1 = P_3 - P_2$. Both circuits work with generic curve parameters $a$, $b$. However, for the Bitcoin curve secp256k1 we have $m = 256$, $a = 0$ and $b = 7$. As a consequence, the operators marked in darkgrey in figure 9a and in figure 9b can be removed, while the field multipliers highlighted in light grey simply become constant multipliers with the value of $4b = 28$. The cost of the latter is 3506 LUTs, 13095 FFs and 0 DSP cells, for a total of 67 pipeline stages clocked at 500 MHz (7 stages less than the field multiplier).

Since the ladder of Algorithm 5 above requires point operations involving the infinite point represented as $(x_O, z_O) = (1,0)$, we can modify the point addition circuit with a logic detecting when $z_3$ is null and making conditional delayed assignments of $x_5 = x_2$ and $z_5 = z_2$ (this is not shown in the figure). The point doubling circuit needs no modification as it already correctly computes $2O = O$.

One instance of the differential addition circuit contains 8 field multiplications while the doubling requires only 7. In terms of latency, the critical path is consisting of three multiplications and a subtraction and is found in the point addition circuit (the rightmost path in figure 9b). The doubling circuit is slightly faster as one of the multipliers is constant. Since for an iteration of the ladder we have to instantiate three-point addition circuits and one doubling, we obtain a total of 5115 DSP cells. Two more field multipliers are contained in the final comparison stage and one more (modulo $n$) is used to perform the checks on the scalars, summing to a grand total of 5610 DSPs which represents e.g. 82% utilization of the VU9P DSP resources.

In a final implementation we can merge the point doubling of figure 9a and the addition circuits of figure 9b with the serializer 740 and deserializer 750 circuits, so that the 500 MHz clock is only feeding these blocks. As a result, they only expose a 125 MHz interface to the rest of the circuit, but with 4 parallel computing slots. Since following the above discussion our goal is to have a pipeline depth of $\dfrac{m}{4}$ cycles, we relax the scheduling of operations as marked with dashed lines in Figure 7 and we insert dummy registers wherever needed to delay wires crossing the dashed lines, to equalize the latency of the doubling circuit to that of the addition circuit and to make the total latency a multiple of 4. We can also have a final register to deserialize outputs to the slower clock. The result in that case is a uniform latency of

$$\frac{74 \times 3 + 12 \times 2 + 2}{4} + 1 = 63$$

clock cycles at 125 MHz. This leaves 1 clock cycle for the feedback unit, so that the goal is fulfilled exactly ($64 \times 4 = 256$).

The control logic reads signatures data from input RAMs 770, and inserts them in the pipeline when this is possible, i.e. when it is not busy processing feedback data. Each of the four control blocks works on a batch of 64 sections. Signatures with a high number of checkpoint values need to be spread over 2 or all the 4 control blocks to be verified with minimal latency.

Each control block operates in two phases of 64 cycles each. During the first phase and for each signature, each control block feeds data to the modulo $n$ multipliers 730 in one clock cycle to perform the two checks of equation (11), i.e. $u_1 s = z$ and $u_2 s = r$. In the same cycle, the following data is sent to the first instance of the point addition unit 710:

$$x_2 = x_{G+Q}, \ z_2 = 1, \ x_3 = x_{G-Q}, \ z_3 = 1, \ x_1 = x_{2G} \tag{12}$$

and the following is sent to the point doubling unit 720:

$$x_2 = x_Q, \ z_2 = 1 \tag{13}$$

so that the comparison block can check if $x_4 z_5 = x_5 z_4$ and can setup the result of each signature verification.

The result is then updated during the second phase, when each control block inserts one section per cycle in the ladder pipeline. Each section that enters the ladder pipeline brings the following metadata information on the signature to which it belongs and on its current ladder iteration:

- A 9-bit signature information, wherein 1-bit signals even/odd, 2-bits identify the control block instance and 6 bits carry the signature index in the batch (0 to 63).
- A 24-bit ladder information, wherein 2-bits bundles in the first byte indicate which point ($T_0$, $T_1$, $T_2$ or nothing) is being computed by each one of the 4-points operation cores, and wherein the second byte carries the index of the scalar bits being processed and the last byte contains the limit index where the section stops.

Using these metadata, the feedback logic at the end of the pipeline can determine if the section computation has completed and can be forwarded to the comparison block or if it needs to be fed back. In the latter case, the bit index is decremented and new inputs are computed for the next ladder iteration according to the scalar bits and the results of the current ladder iteration. To limit the number of registers in the pipeline, the feedback unit has access to RAMs containing the values of the scalars $u_1$, $u_2$ for all the signatures being processed.

When the comparison block has received all sections belonging to a signature, it can finalize its verification result by writing a success flag in the result RAM e.g. only if all comparisons have returned success, failure otherwise.

In some implementations, two modulo $n$ multipliers 730 are instantiated beside the ladder pipeline instead of one. This requires slightly more resources but allows the control logic to insert all data related to a given signature at once in the logic, and basically to process one signature per clock cycle in an overall uniform way.

In some implementations, the main interface and the control logic are duplicated, creating *even* and *odd* blocks, so that when the signature sources are filling up *even* memories with signatures, the main core is processing signatures from the *odd* memories, and vice-versa. This allows for a simpler decoupling and avoids usage of double-port RAM. This increases the number of needed block RAMs, but this is not a limiting FPGA resource.

**Claims**

1. Method for generating a digital signature associated to a digital message, the verification of the digital signature involving an evaluation of at least one mathematical function defined as a sequence of processing steps, a result of a given processing step in the sequence being used as an input for a processing step following the given processing step in the sequence,

    **characterized in that** a first electronic device executes:

    - generating (S210) the digital signature of the digital message;
    - determining (S220) at least one value, hereafter checkpoint value, corresponding to an expected output of a respective processing step; and
    - sending (S240), to a second electronic device, at least part of the digital signature and the at least one checkpoint value.

2. Method according to claim 1, wherein said generating the digital signature implements an elliptic curve digital signature algorithm,

    and wherein said mathematical function corresponds to a scalar-point multiplication constructed upon the elliptic curve group operation of point addition, at least one processing step implementing an addition of two points of the curve.

3. Method according to claim 2, wherein the digital signature comprises a first half and a second half, the second half being a function of a private key,

    wherein the first electronic device executes: determining (S230) a first additional data function of an invert of the second half,

    and wherein the sending to the second electronic device comprises the sending of the first half and of the first additional data.

4. Method according to claim 2, wherein the digital signature comprises a first half and a second half, the second half being a function of a private key,

    and wherein the first electronic device executes: determining (S230) at least one second additional data function of a result of an operation belonging to the group comprising:

    - a product between the first half and an invert of the second half; and
    - a product between a hash of the message and the invert of the second half,

    and wherein the sending to the second electronic device comprises the sending of the at least one second additional data.

5. Method according to claim 1, wherein said generating the digital signature implements a hash-based signature algorithm,

and wherein said mathematical function corresponds to a composition of hash functions, at least one processing step implementing one of the hash functions.

6. Method according to claim 1, wherein said generating the digital signature implements a module-lattice-based digital signature algorithm,
and wherein said mathematical function corresponds to a number theory transformation, at least one processing step implementing one stage of a lattice of the transformation.

7. Method for verifying a digital signature associated to a digital message, the verification of the digital signature involving an evaluation of at least one mathematical function defined as a sequence of processing steps, a result of a given processing step in the sequence being used as an input for a processing step following the given processing step in the sequence,
**characterized in that** a second electronic device executes:

- receiving (S310), from a first electronic device, at least part of the digital signature and at least one value, hereafter checkpoint value, corresponding to an expected output of a respective processing step;
- evaluating (S320) the at least one mathematical function using the received at least one checkpoint value as an input for a processing step following the respective processing step in the sequence, a first processing step in the sequence and at least one processing step using as an input a respective checkpoint value being independently executed as parallel processes; and
- verifying (S350) the digital signature based on the evaluated at least one mathematical function.

8. Method according to claim 7, wherein the second electronic device executes, for at least one received checkpoint value corresponding to an expected output of a respective processing step:

- comparing (S330) the expected output with an output of an execution of the respective processing step; and
- if the output and the expected output are different outputs, generating (S340) an information indicative that the received at least one checkpoint value is inconsistent with the signature.

9. Method according to claim 7 or 8, wherein the digital signature is of an elliptic curve digital signature type,
and wherein said mathematical function corresponds to a scalar-point multiplication constructed upon the elliptic curve group operation of point addition, at least one processing step implementing an addition of two points of the curve.

10. Method according to claim 9, wherein the digital signature comprises a first half and a second half, the second half being a function of a private key,
and wherein the receiving (S310) comprises receiving the first half and a first additional data function of an invert of the second half.

11. Method according to claim 9, wherein the digital signature comprises a first half and a second half, the second half being a function of a private key,

wherein the receiving (S310) comprises receiving at least one second additional data function of a result of an operation belonging to the group comprising:

- a product between the first half and an invert of the second half; and
- a product between a hash of the message and the invert of the second half,

and wherein the verifying the digital signature is further based on the at least one second additional data.

12. Method according to claim 7 or 8, wherein the digital signature is of a hash-based signature type,
and wherein said mathematical function corresponds to a composition of hash functions, at least one processing step implementing one of the hash functions.

13. Method according to claim 7 or 8, wherein the digital signature is of a module-lattice-based digital signature algorithm type,
and wherein said mathematical function corresponds to a number theory transformation, at least one processing step implementing one stage of a lattice of the transformation.

14. Computer program product **characterized in that** it comprises program code instructions for implementing a method according to at least one of the claims 1 to 13, when said program is executed on a computer or a processor.

15. Electronic device comprising at least one processor or at least one field-programmable gate array or at least one dedicated computing machine configured for carrying out the steps of the method of any of the claims 1 to 13.

**Figure 1**

110d

130

120

120d

110

**Figure 2**

S210 — GEN. DIG. SIG.

S220 — DET. CHE. VAL.

S230 — DET. ADD. DAT.

S240 — SEN. SIG. CHE.

**Figure 2**

S310 — REC. SIG. CHE.

S320 — EVA. MAT. FUN.

S330 — COM.

S340 — GEN. INF.

S350 — VER. SIG.

**Figure 3**

400    400

$f_0$    $\widehat{f_0}$
$f_4$    $\widehat{f_1}$
$f_2$    $\widehat{f_2}$
$f_6$    $\widehat{f_3}$
$f_1$    $\widehat{f_4}$
$f_5$    $\widehat{f_5}$
$f_3$    $\widehat{f_6}$
$f_7$    $\widehat{f_7}$

$\omega^0$    $\omega^0$    $\omega^0$
$\omega^0$    $\omega^2$    $\omega^1$
$\omega^0$    $\omega^0$    $\omega^2$
$\omega^0$    $\omega^2$    $\omega^3$

**Figure 4**

110d    502

μP

NVM — RAM

503    501

**Figure 5**

120d    602

μP

NVM — RAM

603    601

**Figure 6**

120d

740

serializer

730    710    720

signature RAMs

760

memory
interface

high
speed
bus

ctrl

m
o
d
n

a
d
d
n

a
d
d
n

a
d
d
n

d
b
i

feedback

comparison

770

result RAMs

deserializer

750

**Figure 7**

Figure 8

Figure 9a

Figure 9b

| | Europäisches Patentamt<br>European Patent Office<br>Office européen des brevets | **EUROPEAN SEARCH REPORT** | **Application Number**<br>EP 24 18 8768 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TALEB ABDUL RAHMAN ET AL: "Speeding-up verification of digital signatures", JOURNAL OF COMPUTER AND SYSTEM SCIENCES, ACADEMIC PRESS, INC., LONDON, GB, vol. 116, 25 September 2020 (2020-09-25), pages 22-39, XP086367035, ISSN: 0022-0000, DOI: 10.1016/J.JCSS.2020.08.005 [retrieved on 2020-09-25] * sections 4.2.1, 5 *<br>----- | 1-15 | INV.<br>H04L9/30<br>H04L9/32 |
| X | ANTIPA ADRIAN ET AL: "Accelerated Verification of ECDSA Signatures", 11 August 2005 (2005-08-11), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 307 - 318, XP047373920, ISBN: 978-3-540-74549-5 * section 4 *<br>----- | 1-15 | |
| X | VIKAS SRIVASTAVA ET AL: "An Overview of Hash Based Signatures", IACR, INTERNATIONAL ASSOCIATION FOR CRYPTOLOGIC RESEARCH , vol. 20230322:053338 22 March 2023 (2023-03-22), pages 1-32, XP061077223, Retrieved from the Internet: URL:https://eprint.iacr.org/archive/2023/411/1679463218.pdf [retrieved on 2023-03-24] * section 5.1 *<br>-----<br>-/-- | 1-15 | **TECHNICAL FIELDS SEARCHED (IPC)**<br><br>H04L |

The present search report has been drawn up for all claims

| Place of search | Date of completion of the search | Examiner |
|---|---|---|
| Munich | 12 December 2024 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

| | Europäisches Patentamt<br>European Patent Office<br>Office européen des brevets | **EUROPEAN SEARCH REPORT** | **Application Number**<br>EP 24 18 8768 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JUNRU HU: "The improved elliptic curve digital signature algorithm", ELECTRONIC AND MECHANICAL ENGINEERING AND INFORMATION TECHNOLOGY (EMEIT), 2011 INTERNATIONAL CONFERENCE ON, 1 August 2011 (2011-08-01), pages 257-259, XP093233744, DOI: 10.1109/EMEIT.2011.6022868 ISBN: 978-1-61284-087-1 * section III-B * ----- | 1-15 | |

**TECHNICAL FIELDS SEARCHED (IPC)**

The present search report has been drawn up for all claims

| Place of search | Date of completion of the search | Examiner |
|---|---|---|
| Munich | 12 December 2024 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)